# EUROPEAN PATENT APPLICATION

(11) **EP 4 818 020 A1**
(43) Date of publication of application: **07.10.2026**
(21) Application number: 26154204.7
(22) Date of filing: 26.01.2026
(51) Int. Cl.: B62L 3/00, B62K 11/04, B62K 23/00, B62M 7/02

(54) **SADDLED VEHICLE**

(30) Priority: 31.03.2025 JP 2025057953
(71) Applicant: Honda Motor Co., Ltd., Toyko 105-8404 (JP)
(72) Inventor: MORI, Hiroki, Tokyo, 105-8404 (JP)
(74) Representative: Weickmann & Weickmann PartmbB

(57) **Abstract**

Provided is a saddled vehicle that can achieve, inter alia, good weight balance while being provided with both of a clutch actuator and a brake modulator. A saddled vehicle (1) includes a power unit (P) that is supported by a vehicle body frame (F), the power unit (P) including a clutch device (CL) for connecting and disconnecting a drive force, a case body (K) that accommodates the clutch device (CL), and a clutch actuator (80) that drives the clutch device (CL), the saddled vehicle (1) further including a brake modulator (50) that supplies hydraulic pressure to hydraulic brake devices (BF, BR). The brake modulator (50) is disposed between a front end (PF) of the power unit (P) and the pivot (14), on one side of a vehicle width direction central line (0) in a vehicle width direction, and the clutch actuator (80) is provided to the case body (K) on the other side of the vehicle width direction central line (0) in the vehicle width direction.

## Description

### BACKGROUND OF THE INVENTION

### Field of the Invention

The present invention pertains to a saddled vehicle and, in particular, pertains to a saddled vehicle including a brake modulator for driving a brake device, and a clutch actuator for driving a clutch device.

### Related Art

In the past, there is known a saddled vehicle that has a brake modulator. The brake modulator generates hydraulic pressure to be supplied to a hydraulic brake device and is also provided with an anti-lock brake system (ABS) that prevents wheels from locking.

Patent Document 1 discloses a configuration for a motorcycle that supports a power unit below a pair of left and right main frames that are connected to a rear section of a head pipe, a brake modulator being disposed at a position between the power unit and the main frame on the left side in the vehicle width direction. By virtue of this configuration, it is possible to address improving accessibility to the brake modulator as well as concentrating mass.

Patent Document 1: Japanese Unexamined Patent Application, Publication No. 2012-16969

### SUMMARY OF THE INVENTION

In recent years, there have been more vehicles provided with a clutch actuator for performing drive control, by a motor or the like, of a clutch device that is disposed on a transmission path of drive force generated by a motive power source, even for saddled vehicles such as a motorcycle. A clutch actuator and the brake modulator described above are both heavy items that have a prescribed volume. Therefore, there has been room for improvement in layout in order to obtain, inter alia, a good weight balance while providing both a clutch actuator and a brake modulator.

An object of the present invention is to resolve the above-described problems with the prior art, and to provide a saddled vehicle that can achieve, inter alia, good weight balance while being provided with both of a clutch actuator and a brake modulator.

In order to achieve the object, a first aspect of the present invention relates to a saddled vehicle (1) including: a vehicle body frame (F) including a head pipe (F1) and a main frame (F2) that extends rearwardly and downwardly from the head pipe (F1); a pivot (14) that supports a swing arm (20) in a manner that enables the swing arm (20) to swing with respect to the vehicle body frame (F), the swing arm (20) pivotally supporting a rear wheel (WR) in a manner that enables the rear wheel (WR) to rotate; and a power unit (P) that is supported by the vehicle body frame (F), the power unit (P) including a clutch device (CL) for connecting and disconnecting a drive force, a case body (K) that accommodates the clutch device (CL), and a clutch actuator (80) that drives the clutch device (CL), the saddled vehicle (1) further including a brake modulator (50) that supplies hydraulic pressure to a hydraulic brake device (BF, BR), the brake modulator (50) being disposed on one side of a vehicle width direction central line (O) in a vehicle width direction and between a front end (PF) of the power unit (P) and the pivot (14), and the clutch actuator (80) being provided to the case body (K) on the other side of the vehicle width direction central line (O) in the vehicle width direction.

In addition, according to a second aspect, the vehicle body frame (F) includes a pair of left and right main frames (F2) that extend rearwardly and downwardly from the head pipe (F1), and pivot frames (F6) that extend downwardly from rear ends of the main frames (F2) and support the pivot (14), the power unit (P) is supported by the vehicle body frame (F) at a position that is below the main frames (F2) and in front of the pivot frames (F6), the brake modulator (50) is disposed at a position that is between the case body (K) and the main frames (F2) in an up-down direction, and the clutch actuator (80) is provided to the case body (K) at a position that is below the main frames (F2).

In addition, according to a third aspect, the brake modulator (50) and the clutch actuator (80) are disposed at positions that overlap in a vehicle body side view.

In addition, according to a fourth aspect, the brake modulator (50) is disposed, in a vehicle body plan view, inside of an outermost section (G) of the main frames (F2) in the vehicle width direction, and at least a portion of the clutch actuator (80) is disposed, in the vehicle body plan view, outside of the outermost section (G) in the vehicle width direction.

In addition, according to a fifth aspect, the case body (K) is provided in front of and below the pivot frame (F6), the power unit (P) includes a cylinder (71) that extends forwardly and upwardly from an upper section of the case body (K), the brake modulator (50) is disposed rearward of the cylinder (71) and between the main frame (F2) and the case body (K), and a vehicle body component (36) is disposed, in the vehicle body plan view, at a position that is between the brake modulator (50) and the clutch actuator (80).

In addition, according to a sixth aspect, the vehicle body component (36) is a clutch control device that controls the clutch actuator (80).

Furthermore, according to a seventh aspect, the case body (K) is disposed in front of and below the pivot frame (F6), the power unit (P) includes a cylinder (71) that extends forwardly and upwardly from an upper section of the case body (K), and the brake modulator (50) is, in a vehicle body side view, disposed at a position rearward of the cylinder (71) and between the main frame (F2) and the case body (K) and is inclined in a rearwardly descending fashion in a direction of inclination (D3) that differs from a direction of inclination (D1) of the cylinder (71) and a direction of inclination (D2) of the main frame (F2).

By virtue of the first aspect, the saddled vehicle (1) includes: the vehicle body frame (F) including the head pipe (F1) and the main frame (F2) that extends rearwardly and downwardly from the head pipe (F1); the pivot (14) that supports a swing arm (20) in a manner that enables the swing arm (20) to swing with respect to the vehicle body frame (F), the swing arm (20) pivotally supporting a rear wheel (WR) in a manner that enables the rear wheel (WR) to rotate; and the power unit (P) that is supported by the vehicle body frame (F), the power unit (P) includes the clutch device (CL) for connecting and disconnecting a drive force, the case body (K) that accommodates the clutch device (CL), and the clutch actuator (80) that drives the clutch device (CL), the saddled vehicle (1) further includes the brake modulator (50) that supplies hydraulic pressure to a hydraulic brake device (BF, BR), the brake modulator (50) is disposed on one side of a vehicle width direction central line (O) in the vehicle width direction and between the front end (PF) of the power unit (P) and the pivot (14), and the clutch actuator (80) is provided to the case body (K) on the other side of the vehicle width direction central line (O) in the vehicle width direction. Therefore, the brake modulator and the clutch actuator that are heavy items are distributively disposed to the left and right flanking the vehicle width direction central line, whereby it becomes possible to maintain the center-of-gravity balance in the vehicle width direction. In addition, the brake modulator and the clutch actuator are disposed within a range for the forward/rearward dimension of the power unit, whereby it is possible to address concentrating mass.

By virtue of the second aspect, the vehicle body frame (F) includes the pair of left and right main frames (F2) that extend rearwardly and downwardly from the head pipe (F1), and the pivot frames (F6) that extend downwardly from rear ends of the main frames (F2) and support the pivot (14), the power unit (P) is supported by the vehicle body frame (F) at the position that is below the main frames (F2) and in front of the pivot frames (F6), the brake modulator (50) is disposed at the position that is between the case body (K) and the main frames (F2) in the up-down direction, and the clutch actuator (80) is provided to the case body (K) at the position that is below the main frames (F2). Therefore, the brake modulator and the clutch actuator are disposed closer to the center of the power unit, whereby it is possible to address concentrating mass.

By virtue of the third aspect, the brake modulator (50) and the clutch actuator (80) are disposed at positions that overlap in the vehicle body side view. Therefore, the brake modulator and the clutch actuator are disposed at positions that overlap in the vehicle body side view, whereby it becomes possible to achieve center-of-gravity balance for the left and right of the vehicle body.

By virtue of the fourth aspect, the brake modulator (50) is disposed, in the vehicle body plan view, inside of the outermost section (G) of the main frames (F2) in the vehicle width direction, and at least a portion of the clutch actuator (80) is disposed, in the vehicle body plan view, outside of the outermost section (G) in the vehicle width direction. Therefore, it becomes possible to address concentrating mass by disposing the brake modulator, which does not require adjustment by a user, inside the main frame, and improving accessibility by disposing the clutch actuator, for which adjustment by the user is possible, at a position that is outside of the main frame in the vehicle width direction.

By virtue of the fifth aspect, the case body (K) is provided in front of and below the pivot frame (F6), the power unit (P) includes the cylinder (71) that extends forwardly and upwardly from the upper section of the case body (K), the brake modulator (50) is disposed rearward of the cylinder (71) and between the main frame (F2) and the case body (K), and the vehicle body component (36) is disposed, in the vehicle body plan view, at the position that is between the brake modulator (50) and the clutch actuator (80). Therefore, it becomes possible to dispose the vehicle body component by effectively using space between the brake modulator and the clutch actuator.

By virtue of the sixth aspect, the vehicle body component (36) is a clutch control device that controls the clutch actuator (80). Therefore, the clutch control device is disposed near the clutch actuator, whereby it is possible to increase maintainability by disposing related components in aggregation.

By virtue of the seventh aspect, the case body (K) is disposed in front of and below the pivot frame (F6), the power unit (P) includes the cylinder (71) that extends forwardly and upwardly from an upper section of the case body (K), and the brake modulator (50) is, in a vehicle body side view, disposed at the position rearward of the cylinder (71) and between the main frame (F2) and the case body (K) and is inclined in a rearwardly descending fashion in the direction of inclination (D3) that differs from the direction of inclination (D1) by the cylinder (71) and the direction of inclination (D2) by the main frame (F2). Therefore, it becomes possible to efficiently dispose the brake modulator in a region that is surrounded by the cylinder, the crankcase, the main frame, and the pivot frame.

### BRIEF DESCRIPTION OF THE DRAWINGS

FIG. 1 is a left-side view of a motorcycle according to the present embodiment;
FIG. 2 is a right-side view of the motorcycle;
FIG. 3 is a perspective view in which a brake modulator is seen from the upper left front side;
FIG. 4 is a left-side view of the brake modulator;
FIG. 5 is a front view of the brake modulator;
FIG. 6 is a right-side view of the brake modulator;
FIG. 7 is a plan view of the motorcycle in a state where a fuel tank and the like have been removed;
FIG. 8 is a perspective view in which the motorcycle in FIG. 7 is viewed from the upper left front side;
FIG. 9 is a partial enlarged view of FIG. 1;
FIG. 10 is a cross-sectional view along line X-X in FIG. 9;
FIG. 11 is a cross-sectional view along line XI-XI in FIG. 9; and
FIG. 12 is a cross-sectional view along line XII-XII in FIG. 9.

### DETAILED DESCRIPTION OF THE INVENTION

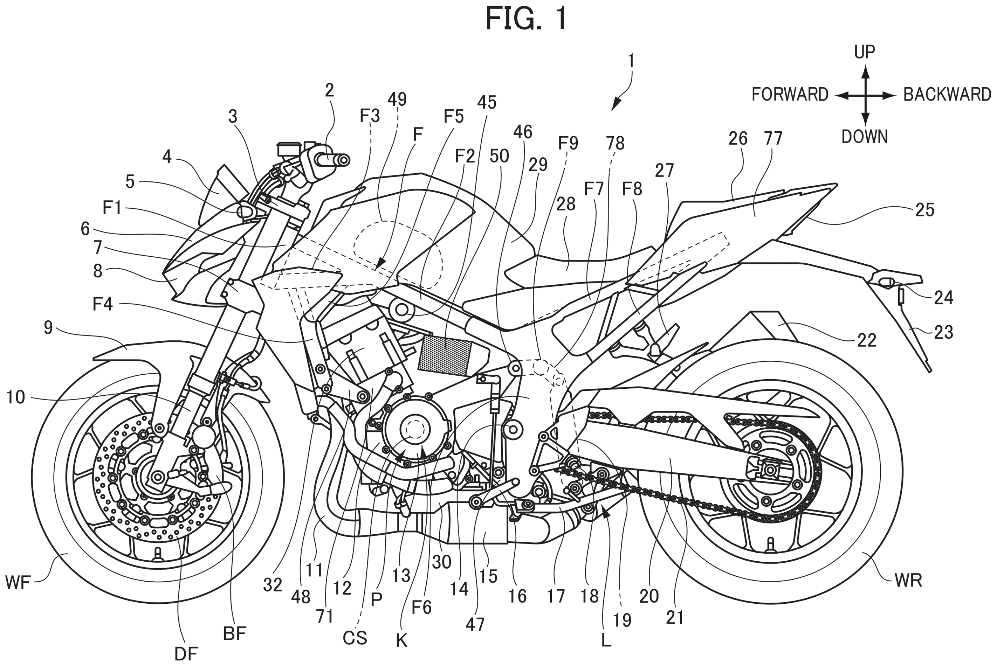

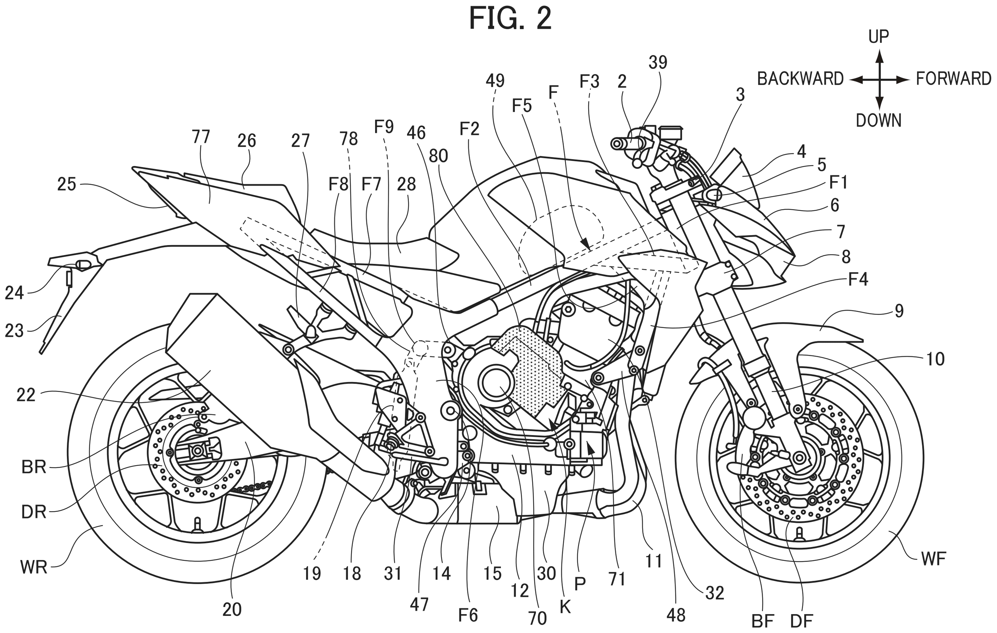

With reference to the drawings, description is given in detail below regarding desirable embodiments of the present invention. FIG. 1 is a left-side view of a motorcycle 1 according to the present embodiment. FIG. 2 is a right-side view of the motorcycle 1. The motorcycle 1 is a saddled vehicle that travels by transmitting rotational motive power from a power unit P to a rear wheel WR via a drive chain 21. A head pipe F1 that pivotally supports a steering stem (not illustrated) in a manner that allows the steering stem to rotate is connected to front end sections of a pair of left and right main frames F2 that configure a vehicle body frame F. A top bridge 3 and a bottom bridge 7 that support a pair of left and right front forks 10 are respectively secured to upper and lower ends of the steering stem.

Steering handlebars 2 for steering a front wheel WF are secured to an upper section of the top bridge 3. A brake lever 39 for activating a brake device for the front wheel WF is attached to the steering handlebar 2 on the right side in the vehicle width direction. The front wheel WF is pivotally supported by the lower end of the front forks 10 in a manner that allows the front wheel WF to rotate. A front fender 9 for covering above the front wheel WF is attached to the front forks 10. A front cowl 6 that supports a meter device 4, a headlight 8, and a pair of left and right front-side flasher lamps 5 is disposed on the front of the head pipe F1. A pair of left and right hydraulic front-wheel brake calipers BF for braking a front-wheel brake disc DF are attached to the front forks 10. A hydraulic rear-wheel brake caliper BR for braking a rear-wheel brake disc DR is attached to an arm member, which is on the right side in the vehicle width direction and is included in a swing arm 20.

A pair of left and right pivot frames F6 are connected to the rear ends of the main frames F2. The pair of left and right pivot frames F6 support a pivot 14 that pivotally support the swing arm 20 in a manner that allows the swing arm 20 to swing up and down. Each pivot frame F6 has a hollow structure resulting from welding two cast components together, and has a shape that extends downward by being bent at a position rearward and downward from a section that is linked to a main frame F2. Pairs of left and right upper-side rear frames F7 and lower-side rear frames F8, which extend rearwardly and upwardly, are connected to rear sections of the pivot frames F6 that are near the tops of the pivot frames F6. A pair of left and right step bars 18 on which a rider will place their feet are attached to rear sections of the pivot frames F6 that are near the bottoms of the pivot frames F6. A pair of left and right tandem steps 27 on which a passenger will place their feet are attached to lower sections of the lower-side rear frames F8. A brake pedal 31 for activating a brake device for the rear wheel WR is disposed near the step bar 18 on the right side in the vehicle width direction. A shift pedal 16 for operating a transmission for the power unit P is disposed in front of the step bar 18 on the left side in the vehicle width direction.

The power unit P, which integrally includes an in-line four-cylinder internal combustion engine and the transmission, is supported at a position that is in front of the pivot frames F6 and below the main frames F2. Combustion gas from the power unit P is introduced to a catalyst device 15 via an exhaust pipe 11, and guided to a muffler 22 that is on the right side in the vehicle width direction. The rear wheel WR that serves as a drive wheel is pivotally supported by the rear end of the swing arm 20 in a manner that allows the rear wheel WR to rotate. The pivot frames F6 are supported by a front section of the swing arm 20, via a link mechanism L and a rear cushion 19. A side stand 17 is attached to the lower end of the pivot frame F6 on the left side in the vehicle width direction, in a manner that enables the side stand 17 to swing.

The power unit P includes a case body K that accommodates components such as the transmission and motive power components. The case body K has a configuration in which a cylinder 71 is attached to an upper section of a crankcase 12 near the front of the crankcase 12, the crankcase 12 being for accommodating a crankshaft CS, and a cylinder head 32 for accommodating a valve train is attached to an upper section of the cylinder 71. A fuel injection device 45 that is linked to a lower section of an air cleaner box 49 is attached to an intake port provided on a rear surface of the cylinder head 32.

A left-side surface of the crankcase 12 includes a generator cover 13 that covers a generator attached to a left end of the crankshaft CS, and a clutch cover 70 that is attached to the right-side surface of the crankcase 12 and covers a clutch device for connecting and disconnecting the transmission of drive force from the power unit P. An oil pan 30 is attached to a lower section of the crankcase 12. The power unit P is supported on the vehicle body frame F by a front-side engine hanger 48 that supports the cylinder 71, a first rear-side engine hanger 46 that supports an upper section of the rear end of the crankcase 12, and a second rear-side engine hanger 47 that supports a lower section of the rear end of the crankcase 12.

The pair of left and right main frames F2 that are connected to a rear section of the head pipe F1 extend rearwardly and downwardly while widening the interval therebetween in the vehicle width direction to the rear of the cylinder head 32, and are subsequently connected to front sections of the pivot frames F6 while narrowing the interval therebetween in the vehicle width direction. A pair of left and right gusset pipes F3, which extend rearwardly and upwardly and are connected to lower sections of the main frames F2, are connected to a rear section of the head pipe F1 near the bottom of the head pipe F1. Lower pipes F4, which extend downward and support the front-side engine hanger 48, are connected to lower sections of the gusset pipes F3. Between the gusset pipes F3 and the lower pipes F4, gusset plates F5 are disposed while being bridged between the two to thereby improve rigidity.

A cross pipe F9 that extends in the vehicle width direction and connects the left and right pivot frames F6 is provided between the left and right pivot frames F6. The first rear-side engine hanger 46 is connected to a front section of the cross pipe F9, and a rear cushion support section 78 that supports the upper end of the rear cushion 19 is connected to a rear section of the cross pipe F9. The second rear-side engine hanger 47 is provided at a lower front end of the pivot frames F6.

A fuel tank 29, which includes an inner wall in a shape that covers the air cleaner box 49, is disposed above the main frames F2. A front-side seat 28 on which the rider sits is disposed rearward of the fuel tank 29, and a rear-side seat 26 on which the passenger sits is disposed rearward of the front-side seat 28. A taillight device 25 is attached to a rear section of a seat cowl 77 that covers a lower side of the rear-side seat 26. A rear fender 23 that supports a pair of left and right rear-side flasher lamps 24 and covers above and to the rear of the rear wheel WR is attached to a lower section of the seat cowl 77.

A brake modulator 50 is disposed rearward of the cylinder head 32 at a position to the left in the vehicle width direction. The brake modulator 50 supplies hydraulic pressure to the front-wheel brake caliper BF and the rear-wheel brake caliper BR and is also provided with an anti-lock brake system (ABS) that prevents the front and rear wheels from locking. In contrast, a clutch actuator 80, which enables the clutch device to be driven by a motor, is attached to the crankcase 12 on the right side in the vehicle width direction at a position that is in front the clutch cover 70. The case body K includes the clutch cover 70 and the generator cover 13, and the clutch actuator 80 is attached to the clutch cover 70.

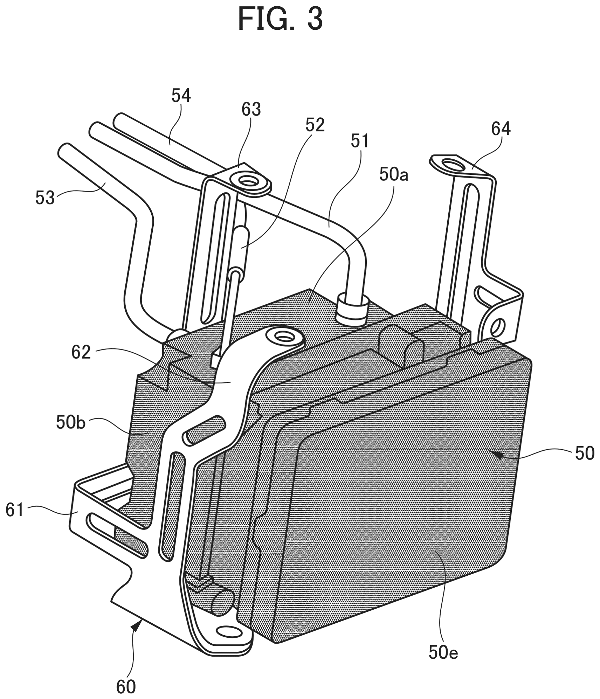

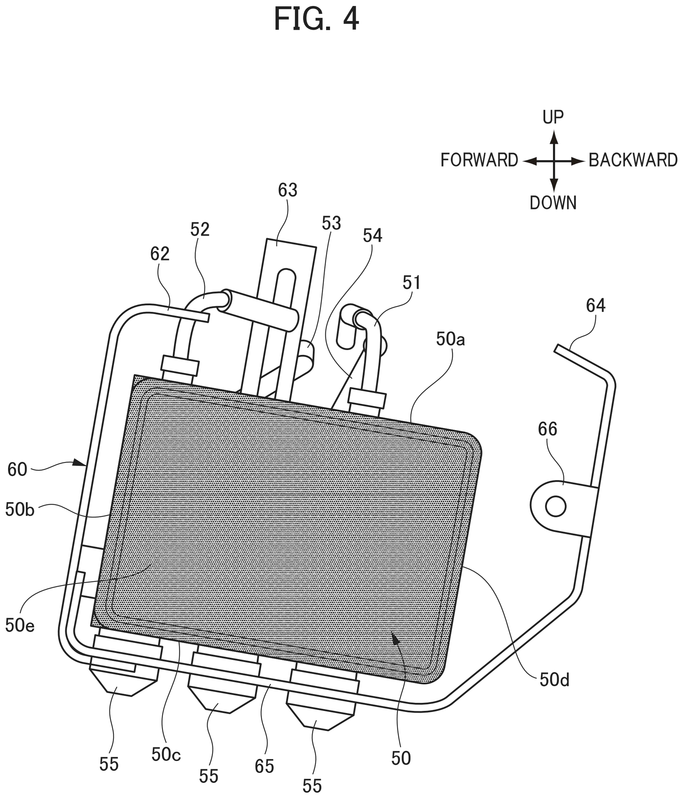

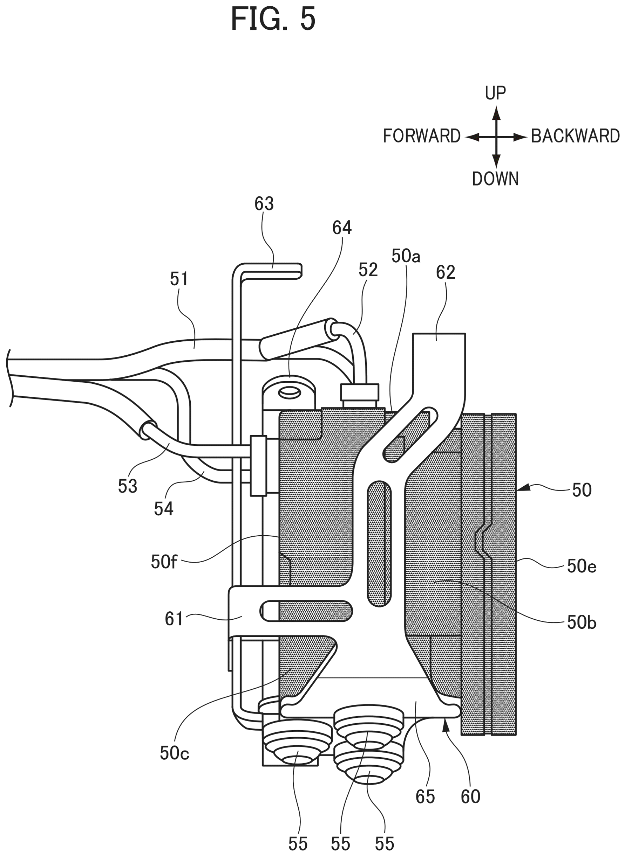

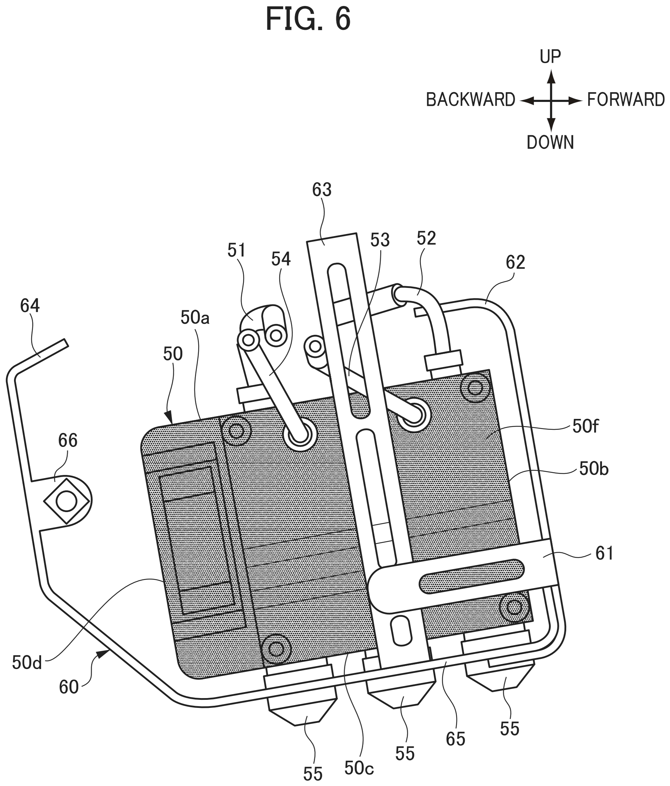

FIG. 3 is a perspective view in which the brake modulator 50 is seen from the upper left front side. In addition, FIG. 4 is a left-side view of the brake modulator 50, FIG. 5 is a front view thereof, and FIG. 6 is a right-side view thereof. The brake modulator 50, in which a motor for generating hydraulic pressure is accommodated, forms a substantially rectangular cuboid that is longest in the forward/rearward dimension with the width dimension thereof being shorter than the height dimension thereof. The brake modulator 50 is attached to the main frame F2 on the left side in the vehicle width direction in a state in which a left-side surface 50e thereof is exposed on the left side in the vehicle width direction.

A bottom surface 50c of the brake modulator 50 is supported, by a vibration-isolation structure that employs three rubber members 55, against a bottom plate 65 included in a bracket 60 that is supported by the main frame F2 on the left side in the vehicle width direction. The bracket 60 includes a front-side extension 62 that extends upward along a front surface 50b of the brake modulator 50, an inside extension 63 that extends from the bottom plate 65 and extends upward along a right-side surface 50f, a link 61 that extends from the front-side extension 62 on the right side in the vehicle width direction and is linked to the inside extension 63, and a rear-side extension 64 that is linked to a rear section of the bottom plate 65 and extends rearwardly and upwardly from a rear surface 50d of the brake modulator 50. A stay 66 for attaching a cover member is provided to the rear-side extension 64.

Extending from a top surface 50a of the brake modulator 50 are a front-wheel brake primary line 52 that is connected to a front-wheel hydraulic master cylinder driven by the brake lever 39, and a rear-wheel brake primary line 51 that is connected to a rear-wheel master cylinder driven by the brake pedal 31. In addition, extending from the right-side surface 50f of the brake modulator 50 are a front-wheel brake secondary line 53 that is connected to the front-wheel brake caliper BF, and a rear-wheel brake secondary line 54 that is connected to the rear-wheel brake caliper BR.

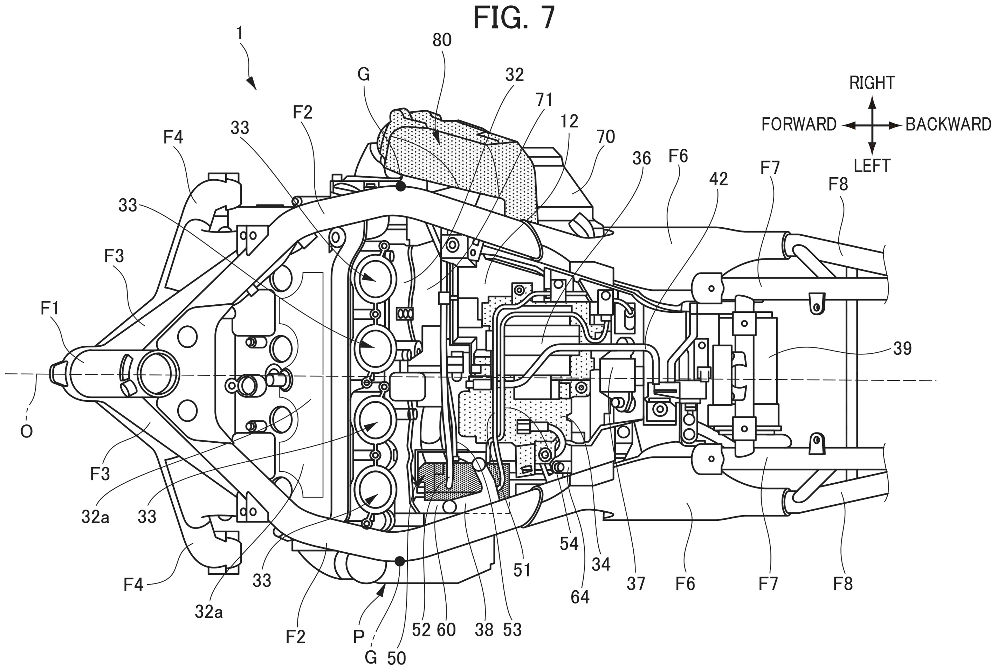

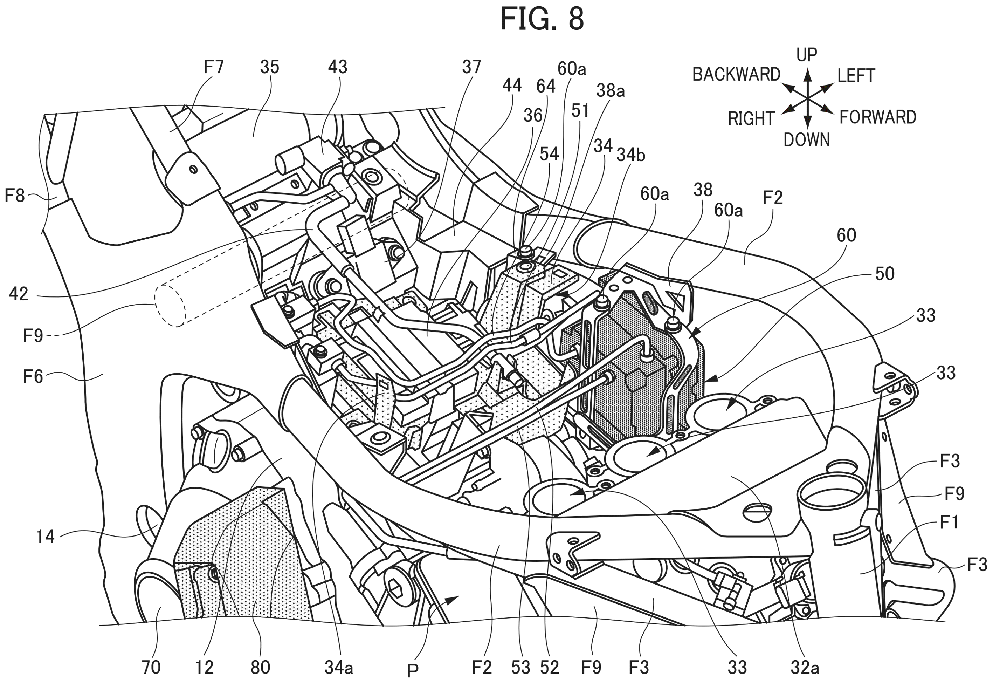

FIG. 7 is a plan view of the motorcycle 1 in a state where the fuel tank 29 and the like have been removed. In addition, FIG. 8 is a perspective view in which the motorcycle 1 in FIG. 7 is viewed from the upper left front side. Reference symbols that are the same as those used above indicate the same or equivalent portions. The cylinder head 32, which includes four intake ports 33 that line up in the vehicle width direction, is kept within the width between the left and right main frames F2 in a vehicle body plan view. A cylinder head cover 32a is attached to an upper section of the cylinder head 32. The main frames F2 have a shape resulting from extending rearwardly and downwardly from a rear section of the head pipe F1 while widening the interval therebetween in the vehicle width direction to the rear of the cylinder head 32, and subsequently extending rearwardly while narrowing the interval therebetween in the vehicle width direction after being bent inwardly in the vehicle width direction at an outermost section G in the vehicle width direction.

The bracket 60 that supports the brake modulator 50 is attached to a rear-side frame stay 38a and a front-side frame stay 38 welded to the inside of the main frame F2 on the left side in the vehicle width direction. In more detail, an upper section of the inside extension 63 and the front-side extension 62 that belong to the bracket 60 are attached to the front-side frame stay 38, and an upper section of the rear-side extension 64 is attached to the rear-side frame stay 38a. As a result, the brake modulator 50 is disposed at a position that is on the left side of a vehicle width direction central line O and is more inward in terms of vehicle width than the outermost section G in the vehicle width direction. A portion of the brake modulator 50 overlaps with the main frame F2 on the left side in the vehicle width direction, in a vehicle body plan view.

The clutch actuator 80, which is disposed adjacent to the front side of the clutch cover 70 and is attached to the crankcase 12, is disposed on the right side of the vehicle width direction central line O. Substantially the entirety of the clutch actuator 80 is positioned outside of the main frame F2 and outside of the outermost section G in the vehicle width direction, in a vehicle body plan view. By virtue of the disposition of the brake modulator 50 and the clutch actuator 80 according to the present embodiment, it becomes possible to distributively dispose two heavy items to the left and right while flanking the vehicle width direction central line O, whereby center-of-gravity balance in the vehicle width direction is maintained. In addition, the brake modulator 50 and the clutch actuator 80 are disposed within a range for the forward/rearward dimension of the power unit P, whereby it is possible to address concentrating mass.

In addition, the brake modulator 50 is disposed inside of the outermost section G in the vehicle width direction of the main frames F2 in the vehicle body plan view, and at least a portion of the clutch actuator 80 is disposed outside of the outermost section G in the vehicle width direction in the vehicle body plan view. As a result, it is possible to address concentrating mass by disposing the brake modulator 50, which does not require adjustment by a user, inside of the main frames F2, and improve accessibility by disposing the clutch actuator 80, for which there is a possibility of being adjusted by a user, at a corresponding position that is outside of the main frames F2 in the vehicle width direction.

A tray 34 that can accommodate a plurality of vehicle body components is disposed at a position that is rearward of the cylinder head 32 and at the center in the vehicle width direction. The tray 34 supports vehicle body components such as a clutch control device 36 that controls the clutch actuator 80. A support protrusion 34a that supports a relay or the like is provided at a right-side front section of the tray 34. A cut-out 34b, which is for enabling the brake modulator 50 to be mounted and unmounted in a state where the tray 34 is attached to a prescribed position, is formed at a left-side front section of the tray 34. The brake modulator 50 can be removed from the inside in the vehicle width direction by removing fastening members 60a for securing the bracket 60 to the front-side frame stay 38 and the rear-side frame stay 38a. By virtue of this structure, maintenance work and assembly work for the brake modulator 50 are facilitated. In addition, the tray 34 may be a result of combining a plurality of trays. For example, the tray 34 may be provided with a tray for accommodating fuel system parts such as a later-described canister, and a tray for accommodating an electric component that is attached to the tray. By virtue of this configuration, subassembly in accordance with vehicle body components is enabled.

The brake modulator 50 is disposed rearward of the cylinder 71 and between the main frame F2 and the crankcase 12 in the up-down direction, and the clutch control device 36 is disposed at a position between the brake modulator 50 and the clutch actuator 80, whereby the space between the two is effectively used to enable the clutch control device 36 to be disposed. In addition, the clutch control device 36 is disposed near the clutch actuator 80, whereby it is possible to improve maintainability by disposing related components in aggregation.

The front-wheel brake primary line 52 and the front-wheel brake secondary line 53 that extend from the brake modulator 50 are routed toward the right side in the vehicle width direction at positions that are in front of the tray 34. In addition, the rear-wheel brake primary line 51 and the rear-wheel brake secondary line 54 are routed toward the right side in the vehicle width direction while passing above the tray 34 and the control device 36.

A bank angle sensor 37 and a purge valve 43 are supported by a rear tray 44 that is disposed behind the tray 34. A canister 35 for storing vaporized fuel is disposed behind the purge valve 43. A purge hose 42, which is supported by the tray 34, is routed below the rear-wheel brake primary line 51 and the rear-wheel brake secondary line 54 and is directed in the forward-backward direction. The rear-wheel brake primary line 51 and the rear-wheel brake secondary line 54 are provided with relief sections that are bent and straddle the purge hose 42.

In the present embodiment, the clutch actuator 80 has a higher weight than that of the brake modulator 50, and an amount of offset outside in the vehicle width direction is also set higher. As a result, a center-of-gravity position is slightly offset on the right side in the vehicle width direction.

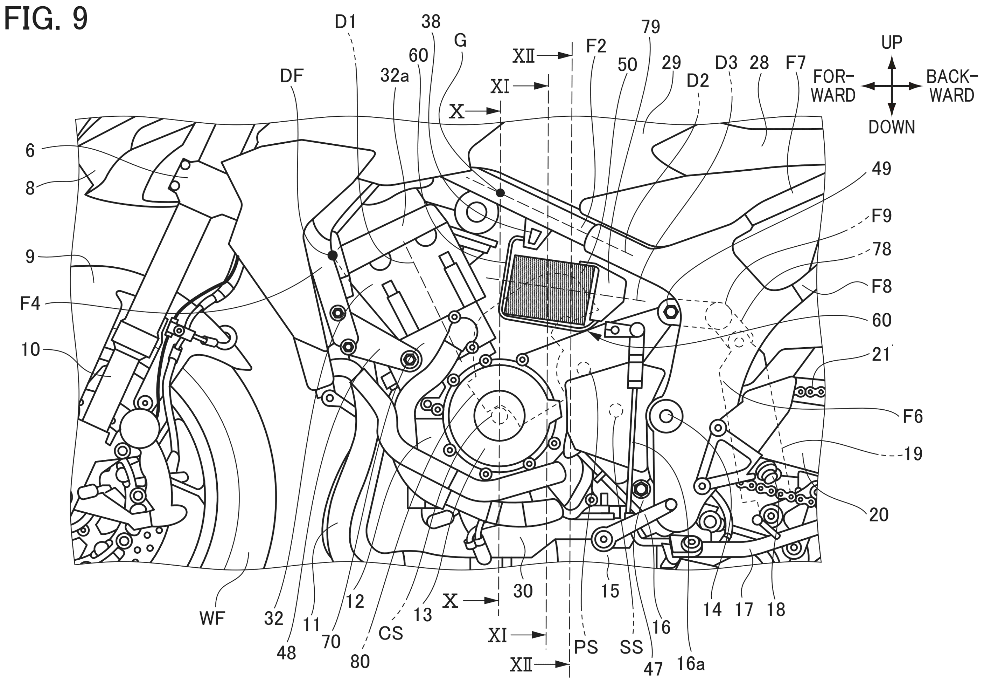

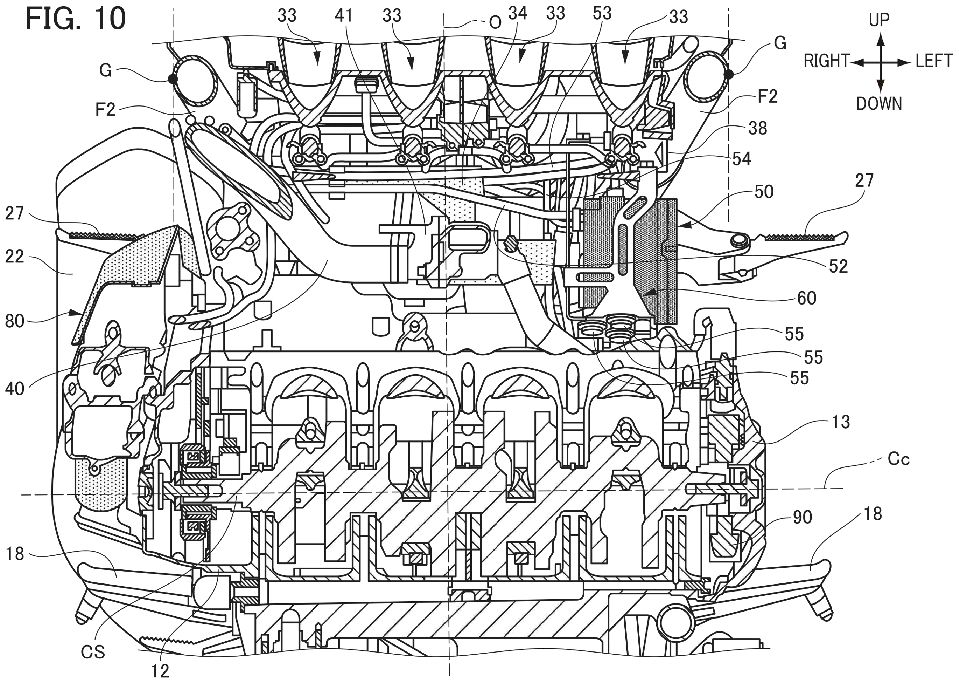

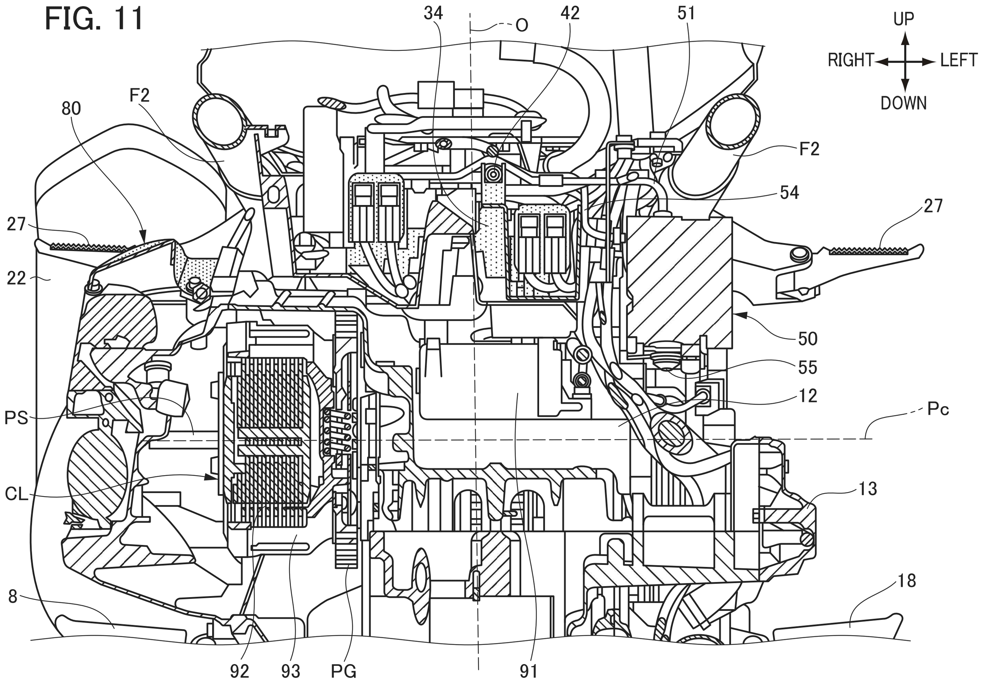

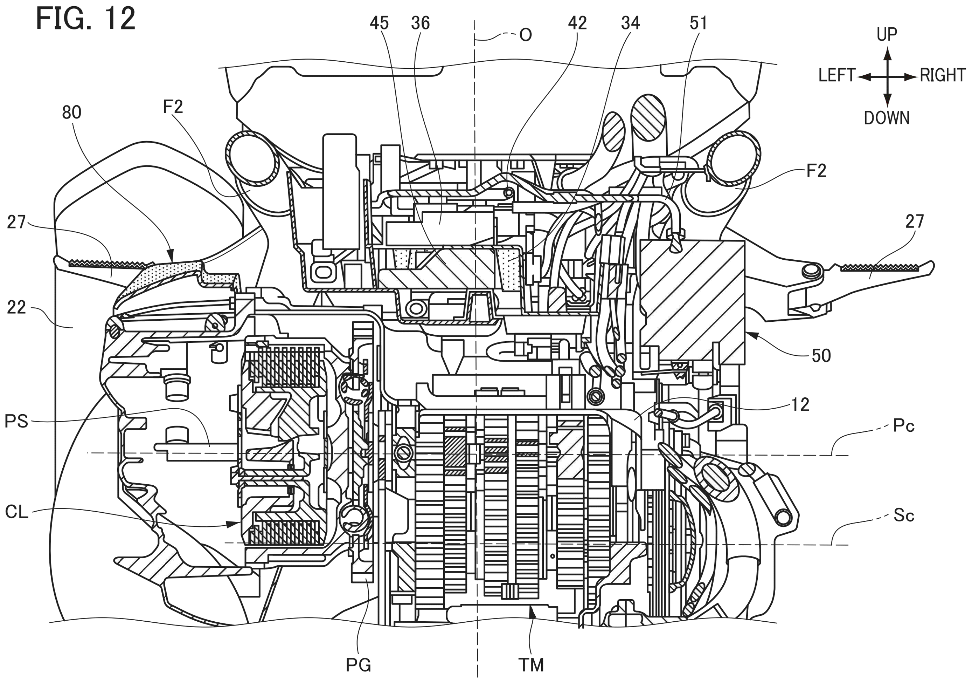

FIG. 9 is a partial enlarged view of FIG. 1. FIG. 10 is a cross-sectional view along line X-X in FIG. 9, FIG. 11 is a cross-sectional view along line XI-XI in FIG. 9, and FIG. 12 is a cross-sectional view along line XII-XII in FIG. 9. Reference symbols that are the same as those used above indicate the same or equivalent portions. The power unit P includes the crankcase 12 that extends from in front of the pivot 14 to between lower ends of lower frames F4, and the cylinder 71 that extends from an upper front section of the crankcase 12 while being inclined toward the front and above. As a result, in a vehicle body side view, a substantially triangular space is formed, said space being behind the cylinder 71, upward of the crankcase 12, forward of the pivot frames F6, and below the main frames F2.

The brake modulator 50 and the clutch actuator 80 are mostly kept in the above-described substantially triangular space, in the vehicle body side view. As a result, the brake modulator 50 and the clutch actuator 80 are disposed closer to the center of the power unit P, whereby it is possible to address concentrating mass. In addition, the brake modulator 50 and the clutch actuator 80 are disposed at positions that overlap in the vehicle body side view. As a result, center-of-gravity balance to the left and right of the vehicle body is achieved. A cover member 79 is attached to a left-side section of the bracket 60 that holds the brake modulator 50.

A primary shaft PS (center height Pc) is disposed at a position that is rearward and upward from the crankshaft CS (center height Cc) in the power unit P, and a secondary shaft SS (center height Sc) that corresponds to an output shaft is disposed at a position that is rearward and downward from the primary shaft PS. A transmission TM that is subjected to a gear shifting operation by the shift pedal 16 is configured by a plurality of gear trains that are supported by the primary shaft PS and the secondary shaft SS. A clutch device CL for connecting and disconnecting a drive force transmitted from the crankshaft CS is provided at the right end of the primary shaft PS. A primary driven gear PG for transmitting the drive force from the crankshaft CS is attached to a clutch case 93 that accommodates a plurality of clutch plates 92.

A thermostat case 41 is disposed on the rear surface of the cylinder 71, inside of the brake modulator 50 in the vehicle width direction. A water hose 40 through which a cooling liquid passes is connected to the thermostat case 41. A generator 90 that is covered by the generator cover 13 is attached to the left end of the crankshaft CS. A starter motor 91, which causes the crankshaft CS to rotate when starting up the power unit P, is attached to the crankcase 12 at a position that is upward and rearward from the crankshaft CS.

The brake modulator 50 is disposed on one side of the vehicle width direction central line O in the vehicle width direction - between a front end PF of the power unit P and the secondary shaft SS and, in a vehicle body side view, is disposed at a position that is from directly above a main shaft MS to directly above the crankshaft CS. In more detail, in a vehicle body side view, the brake modulator 50 is disposed at a position that is rearward of the cylinder 71 and between the main frames F2 and the crankcase 12, in a rearwardly descending direction of inclination D3 that differs to a rearwardly descending direction of inclination D1 by the cylinder 71 and a rearwardly descending direction of inclination D2 by the main frames F2. Specifically, the brake modulator 50 is disposed in the direction of inclination D3, at an angle that is gentler than that of the direction of inclination D1 by the cylinder 71 and the direction of inclination D2 by the main frames F2. As a result, the brake modulator 50 that has a substantially rectangular parallelepiped shape is disposed in a region surrounded by the cylinder 71, the crankcase 12, the main frames F2, and the pivot frames F6 in a manner that avoids each of the cylinder 71, the crankcase 12, the main frames F2, and the pivot frames F6, and thus will be able to be efficiently disposed.

The clutch actuator 80 is disposed in a range that goes from in front of the crankshaft CS, straddles the crankshaft CS, to directly above the primary shaft PS. In addition, at least a portion of the clutch actuator 80 is disposed above the crankshaft CS. As a result, in a vehicle body side view, the clutch actuator 80 and the brake modulator 50 will be disposed in aggregation by at least portions thereof that are rearward of the crankshaft CS and in front of the primary shaft PS overlapping.

By virtue of the disposition of the brake modulator 50 and the clutch actuator 80 according to the present invention as described above, the power unit P includes the clutch device CL for connecting and disconnecting a drive force transmitted by the secondary shaft SS, the crankcase 12 that accommodates the clutch device CL, and the clutch actuator 80 that drives the clutch device CL, the brake modulator 50 that supplies hydraulic pressure to the hydraulic front-wheel brake caliper BF and rear-wheel brake caliper BR is provided, the brake modulator 50 is disposed on one side in the vehicle width direction with respect to the vehicle width direction central line O and between the front end PF of the power unit P and the secondary shaft SS, and the clutch actuator 80 is provided to the crankcase 12 on the other side of the vehicle width direction central line O in the vehicle width direction. Therefore, the brake modulator 50 and the clutch actuator 80, which are heavy items, are distributively disposed to the left and right, flanking the vehicle width direction central line, whereby it becomes possible to maintain center-of-gravity balance in the vehicle width direction. In addition, the brake modulator 50 and the clutch actuator 80 are disposed within a range for the forward/rearward dimension of the power unit P, whereby it is possible to address concentrating mass.

The form of the motorcycle, the shape or structure of the vehicle body frame, the shape or structure of the brake modulator, the shape or structure of the clutch actuator, the disposition of the brake modulator and the clutch actuator, the structure of the clutch device, the structure of the brake device, and the like are not limited to the embodiment described above, and various modifications are possible. For example, the power unit may employ, as a motive power source, a motor that is driven by electric power. In addition, it may be that the brake modulator is disposed on the right side in the vehicle width direction for a vehicle, and the clutch actuator is disposed on the left side in the vehicle width direction. The brake modulator structure and the clutch actuator structure according to the present embodiment is not limited to a motorcycle, and can be applied to various vehicles, such as a saddled three-wheeled vehicle or four-wheeled vehicle.

### EXPLANATION OF REFERENCE NUMERALS

1 ... Motorcycle (saddled vehicle), 12 ... Crankcase, K ... Case body, 14 ... Pivot, 20 ... Swing arm, 36 ... Clutch control device (vehicle body component), 50 ... Brake modulator, 71 ... Cylinder, 80 ... Clutch actuator, F ... Vehicle body frame, F1 ... Head pipe, F2 ... Main frame, F6 ... Pivot frame, P ... Power unit, PF ... Front end of power unit, SS ... Secondary shaft (output shaft), WR ... Rear wheel, O ... Vehicle width direction central line, G ... Outermost section of main frame in vehicle width direction, BF ... Front-wheel brake caliper (brake device), BR ... Rear-wheel brake caliper (brake device), CL ... Clutch device, D1 ... Direction of inclination of cylinder, D2 ... Direction of inclination of main frame, D3 ... Direction of inclination of brake modulator

## Claims

1. A saddled vehicle (1), comprising:
a vehicle body frame (F) including a head pipe (F1) and a main frame (F2) that extends rearwardly and downwardly from the head pipe (F1);
a pivot (14) that supports a swing arm (20) in a manner that enables the swing arm (20) to swing with respect to the vehicle body frame (F), the swing arm (20) pivotally supporting a rear wheel (WR) in a manner that enables the rear wheel (WR) to rotate; and a power unit (P) that is supported by the vehicle body frame (F), the saddled vehicle (1)
**characterized in that**
the power unit (P) includes a clutch device (CL) for connecting and disconnecting a drive force, a case body (K) that accommodates the clutch device (CL), and a clutch actuator (80) that drives the clutch device (CL),
the saddled vehicle (1) further comprises a brake modulator (50) that supplies hydraulic pressure to a hydraulic brake (BF, BR),
the brake modulator (50) is disposed on one side of a vehicle width direction central line (O) in a vehicle width direction and between a front end (PF) of the power unit (P) and the pivot (14), and
the clutch actuator (80) is provided to the case body (K) on the other side of the vehicle width direction central line (O) in the vehicle width direction.

2. The saddled vehicle according to claim 1, **characterized in that**
the vehicle body frame (F) includes a pair of left and right main frames (F2) that extend rearwardly and downwardly from the head pipe (F1), and pivot frames (F6) that extend downwardly from rear ends of the main frames (F2) and support the pivot (14),
the power unit (P) is supported by the vehicle body frame (F) at a position that is below the main frames (F2) and in front of the pivot frames (F6),
the brake modulator (50) is disposed at a position that is between the case body (K) and the main frames (F2) in an up-down direction, and
the clutch actuator (80) is provided to the case body (K) at a position that is below the main frames (F2).

3. The saddled vehicle according to claim 2, **characterized in that** the brake modulator (50) and the clutch actuator (80) are disposed at positions that overlap in a vehicle body side view.

4. The saddled vehicle according to claim 3, **characterized in that**
the brake modulator (50) is disposed, in a vehicle body plan view, inside of an outermost section (G) of the main frames (F2) in the vehicle width direction, and
at least a portion of the clutch actuator (80) is disposed, in the vehicle body plan view, outside of the outermost section (G) in the vehicle width direction.

5. The saddled vehicle according to claim 4, **characterized in that**
the case body (K) is provided in front of and below the pivot frame (F6),
the power unit (P) includes a cylinder (71) that extends forwardly and upwardly from an upper section of the case body (K),
the brake modulator (50) is disposed rearward of the cylinder (71) and between the main frame (F2) and the case body (K), and
a vehicle body component (36) is disposed, in the vehicle body plan view, at a position that is between the brake modulator (50) and the clutch actuator (80).

6. The saddled vehicle according to claim 5, **characterized in that** the vehicle body component (36) is a clutch controller that controls the clutch actuator (80).

7. The saddled vehicle according to claim 1 or 2, **characterized in that**
the case body (K) is disposed in front of and below the pivot frame (F6),
the power unit (P) includes a cylinder (71) that extends forwardly and upwardly from an upper section of the case body (K), and
the brake modulator (50) is, in a vehicle body side view, disposed at a position that is rearward of the cylinder (71) and between the main frame (F2) and the case body (K) and is inclined in a rearwardly descending fashion in a direction of inclination (D3) that differs from a direction of inclination (D1) of the cylinder (71) and a direction of inclination (D2) of the main frame (F2).
